# FASCICULE DE BREVET EUROPEEN

(11) **EP 2 586 654 B1**
(45) Date de publication et mention de la délivrance du brevet: **13.07.2016**
(21) Numéro de dépôt: 12188941.4
(22) Date de dépôt: 18.10.2012
(51) Int. Cl.: B60N 2/44, B60N 2/68, B61D 33/00

(54) **Siège passager pour véhicule ferroviaire de transport comportant une goulotte de préhension**
Passagiersitz für Transportschienenfahrzeug, der mit einer Griffrille versehen ist
Passenger seat for railway transport vehicle comprising a gripping chute

(30) Priorité: 28.10.2011 FR 1159807
(43) Date de publication de la demande: 01.05.2013
(73) Titulaire: SNCF MOBILITES, 93200 Saint-Denis (FR)
(72) Inventeur: Perdriel, Philippe, 92170 VANVES (FR); Gallais, Cédric, 27950 SAINT MARCEL (FR)
(74) Mandataire: Gevers & Orès

(56) Documents cités:
- EP-A1- 2 116 414
- DE-A1- 19 705 603
- US-A- 3 802 738

## Description

La présente invention concerne le domaine des sièges pour les passagers d'un véhicule ferroviaire de transport, en particulier, pour un véhicule ferroviaire du type TGV ® pour « train à grande vitesse ».

Un véhicule ferroviaire comporte de manière classique plusieurs voitures dans lesquelles sont montés des sièges regroupés en rangées de sièges. De tels sièges sont, notamment, décrits dans le document US-A-3 802 738 qui correspond au préambule de la revendication 1.

Les rangées de sièges sont réparties dans la longueur de la voiture les unes derrière les autres. La voiture comporte généralement un couloir de circulation central, ménagé entre les sièges d'une même rangée, pour permettre aux passagers de circuler dans la voiture et ainsi accéder à leur siège. De manière traditionnelle, les sièges sont regroupés deux par deux dans la voiture, un premier siège étant à proximité du couloir central tandis qu'un deuxième siège est situé à proximité d'une fenêtre de la voiture ferroviaire.

Afin de permettre la circulation de personnes à mobilité réduite (PMR) dans la voiture, le couloir central doit être suffisamment large et présenter des points de préhension facilement accessibles. On connaît dans l'art antérieur des sièges, situés à proximité du couloir central, comportant une poignée de préhension s'étendant depuis une partie supérieure du dossier du siège vers le couloir. Une telle poignée de préhension présente de nombreux inconvénients. Tout d'abord, la poignée est en saillie dans le couloir central ce qui diminue l'espace de circulation. En outre, elle n'est pas accessible par des enfants du fait de son positionnement en partie supérieure du siège. Enfin, lorsqu'un passager circulant dans le couloir agrippe la poignée de préhension d'un siège, le siège est secoué ce qui peut déranger le passager assis sur le siège, en particulier, lorsque celui-ci est endormi.

Afin d'éliminer au moins certains de ces inconvénients, l'invention concerne un siège passager pour véhicule de transport, notamment ferroviaire, comportant un dossier, une assise et un châssis sur lequel sont montés le dossier et l'assise, le châssis du siège comportant une coque de protection dans laquelle est monté le dossier, la coque de protection comportant au moins une partie de protection enveloppant partiellement au moins une surface du dossier de manière à ménager, entre ladite surface du dossier et ladite partie de protection, une goulotte de préhension adaptée pour permettre l'insertion des doigts d'un passager.

La goulotte de préhension permet avantageusement à un passager de s'accrocher à une partie fixe du siège sans engendrer de mouvement du dossier du siège. En outre, une goulotte de préhension possède un encombrement faible ce qui limite l'encombrement du siège. Enfin, la goulotte de préhension permet une préhension sûre et fiable étant donné qu'elle permet l'insertion des doigts d'un passager qui peut alors assurer son équilibre.

De préférence toujours, la goulotte de préhension possède une épaisseur supérieure à 20 mm et/ou une profondeur supérieure à 10 mm. Ainsi, la goulotte de préhension est suffisamment large pour permettre l'insertion des doigts d'un passager tout en limitant l'encombrement du siège.

De préférence, la coque de protection comporte au moins une partie latérale de protection enveloppant partiellement un flanc du dossier de manière à ménager, entre ledit flanc du dossier et ladite partie latérale de protection, une goulotte de préhension latérale adaptée pour permettre l'insertion des doigts d'un passager.

La goulotte de préhension latérale permet avantageusement à un passager de s'accrocher à une partie fixe du siège sans engendrer de mouvement du dossier du siège. En outre, une goulotte de préhension latérale possède un encombrement faible ce qui limite l'encombrement du siège lorsqu'il est monté à proximité d'un couloir de circulation dans une voiture ferroviaire. Enfin, la goulotte de préhension permet une préhension sûre et fiable étant donné qu'elle permet l'insertion des doigts d'un passager qui peut alors assurer son équilibre.

De manière préférée, la partie latérale de protection s'étend parallèlement au flanc du dossier de manière à ne pas former de saillie latérale particulière dans un couloir de circulation d'un véhicule ferroviaire. Selon un aspect de l'invention, la partie latérale de protection comporte un bord d'extrémité s'étendant verticalement ce qui facilite la préhension.

De préférence, la goulotte de préhension latérale s'étend verticalement entre le dossier et la coque de protection. Dans une forme de réalisation de l'invention, la goulotte de préhension latérale s'étend verticalement substantiellement sur toute la hauteur du siège. Ainsi, le siège offre plusieurs points de préhension de hauteurs différentes ce qui permet avantageusement à un passager de petite taille de s'agripper à la partie inférieure de la goulotte préhension latérale.

De préférence encore, le siège comportant un accoudoir articulé, la goulotte de préhension latérale s'étend entre l'articulation de l'accoudoir et une partie supérieure du dossier. Ainsi, un passager peut accéder à la goulotte de préhension latérale quelque soit sa taille. De manière préférée, la goulotte de préhension latérale s'étend au moins entre une hauteur de 80 cm et une hauteur de 100 cm.

De préférence encore, la goulotte de préhension latérale possède une largeur supérieure à 20mm, de préférence, égale à 25 mm. Ainsi, la goulotte de préhension latérale est suffisamment large pour permettre l'insertion des doigts d'un passager tout en limitant l'encombrement du siège.

De préférence toujours, la goulotte de préhension latérale possède une profondeur supérieure à 20mm, de préférence, supérieure à 25 mm. Ainsi, la goulotte de préhension latérale est suffisamment large pour permettre l'insertion des doigts d'un passager tout en limitant l'encombrement du siège.

Selon un aspect de l'invention, la coque de protection comporte au moins une partie arrière de protection enveloppant partiellement une surface arrière du dossier de manière à ménager, entre la surface arrière du dossier et ladite partie arrière de protection, une goulotte de préhension arrière adaptée pour permettre l'insertion des doigts d'un passager.

La goulotte de préhension arrière permet avantageusement à un passager situé à l'arrière du siège de s'accrocher à une partie fixe du siège sans secouer le dossier du siège. Cela est particulièrement avantageux pour un passager assis sur un siège arrière et qui souhaite se relever. En outre, une goulotte de préhension arrière possède un encombrement faible ce qui limite l'encombrement du siège

De préférence, la goulotte de préhension arrière s'étend latéralement entre le dossier et la coque de préhension. Ainsi, un passager peut agripper la goulotte de préhension arrière avec ses deux mains.

De préférence, la partie arrière de protection s'étend parallèlement à la surface arrière du dossier.

De manière préférée, la goulotte de préhension arrière est continue avec la goulotte de préhension latérale de manière à former une continuité de points de préhension pour un passager. De manière avantageuse, une personne à mobilité réduite peut s'aider de la goulotte de préhension latérale pour atteindre son siège puis s'aider de la goulotte de préhension arrière pour assurer son équilibre lorsqu'elle souhaite s'assoir. Lors de ses différents déplacements, les doigts du passager sont guidés de manière continue dans les goulottes de préhension ce qui est avantageux.

De préférence, la goulotte de préhension arrière possède une largeur supérieure à 20mm, de préférence, supérieure à 40 mm. Ainsi, la goulotte de préhension arrière est suffisamment large pour permettre l'insertion des doigts d'un passager tout en limitant l'encombrement du siège.

L'invention sera mieux comprise à la lecture de la description qui va suivre, donnée uniquement à titre d'exemple, et se référant aux dessins annexés, des références identiques étant données à des objets semblables, sur lesquels :
- la figure 1 est une vue en perspective depuis l'avant d'un couple de sièges selon l'invention ;
- la figure 2 est une vue en perspective depuis l'arrière du couple de sièges de la figure 1 ;
- la figure 3 est une vue en perspective rapprochée d'un flanc de dossier d'un siège de la figure 1 ;
- la figure 4 est une vue schématique de face d'une goulotte de préhension latérale d'un siège de la figure 1 ;
- la figure 5 est une vue en perspective rapprochée de la partie supérieure de la goulotte de préhension latérale de la figure 4 ;
- la figure 6 est une vue en perspective de dessus d'un couple de sièges selon l'invention ; et
- la figure 7 est une vue en perspective rapprochée de la figure 6.

Il faut noter que les figures exposent l'invention de manière détaillée pour mettre en oeuvre l'invention, lesdites figures pouvant bien entendu servir à mieux définir l'invention le cas échéant.

Par la suite, l'invention va être présentée pour un couple de sièges mais il va de soi que l'invention s'applique à un siège individuel.

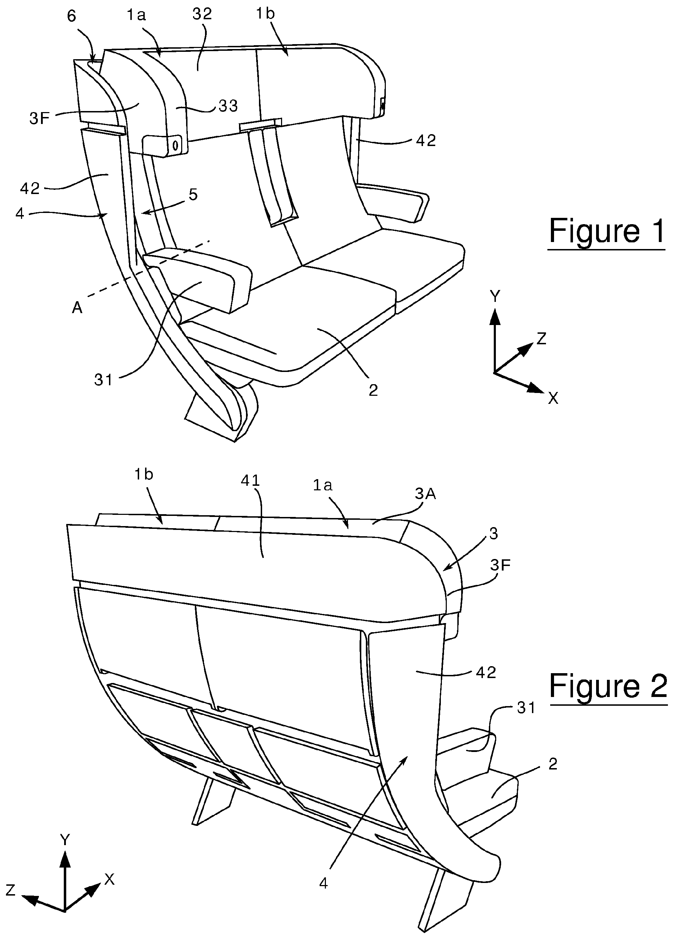

La figure 1 représente en perspective avant un couple de sièges destiné à être monté dans une voiture ferroviaire. Par la suite, les sièges sont présentés dans un repère orthogonal (X, Y, Z) dans lequel l'axe X s'étend horizontalement et est orienté depuis l'arrière vers l'avant, l'axe Y s'étend verticalement et est orienté depuis le bas vers le haut et l'axe Z s'étend latéralement et est orienté depuis la gauche vers la droite. Par la suite, les termes « avant », « arrière », «haut (supérieur) », « bas (inférieur) », « gauche » et « droite » sont définis par rapport au repère orthogonal (X, Y, Z) de la figure 1.

Toujours en référence à la figure 1, le couple de sièges comporte un siège gauche 1a et un siège droit 1b. Par la suite, seul le siège gauche 1b sera présenté, les sièges 1a, 1b étant symétriques l'un de l'autre par un plan vertical s'étendant parallèlement au plan (X,Y).

Comme représenté sur les figures 1 et 2, le siège 1a comporte un châssis formant la structure du siège 1a sur lequel sont montés une assise 2 s'étendant sensiblement horizontalement et un dossier 3 s'étendant sensiblement verticalement. De manière préférée, l'assise 2 et le dossier 3 sont articulés dans le châssis pour permettre une modification de la position du siège. Le dossier 3 se présente sensiblement sous la forme d'un pavé parallélépipédique dont une partie latérale est articulée autour d'un axe latéral Z_{A} de manière à former un accoudoir rétractable 31 comme représenté à la figure 1. Le dossier 3 comporte en outre un appui-tête principal 32 formé à l'extrémité supérieure du dossier 3 ainsi qu'un appui-tête auxiliaire 33 s'étendant en saillie vers l'avant orthogonalement à l'appui-tête principal 32 comme représenté à la figure 1. Dans cet exemple, le siège gauche 1a comporte un appui-tête auxiliaire 33 sur sa partie latérale droite.

Selon l'invention, en référence à la figure 2, le châssis comporte une coque de protection 4 qui enveloppe partiellement une surface arrière 3A du dossier 3 ainsi qu'un flanc latéral 3F du dossier 3. Le châssis comporte en outre un pied de fixation permettant de relier la coque de protection 4 à un plancher du véhicule ferroviaire. Dans cet exemple, la coque de protection 4 est monobloc et est constituée d'une matière rigide, de préférence, de métal ou de plastique.

Comme représenté sur les figures 1 et 2, la coque de protection 4 comporte une partie arrière de protection 41 et deux parties latérales de protection 42. Par la suite, seule la partie latérale droite de protection 42 qui enveloppe partiellement le flanc droit 3F du dossier 3 du siège droit 1a sera présentée. La partie latérale droite de protection 42 peut également se présenter sous la forme d'une pièce rapportée qui est montée sur la coque de protection.

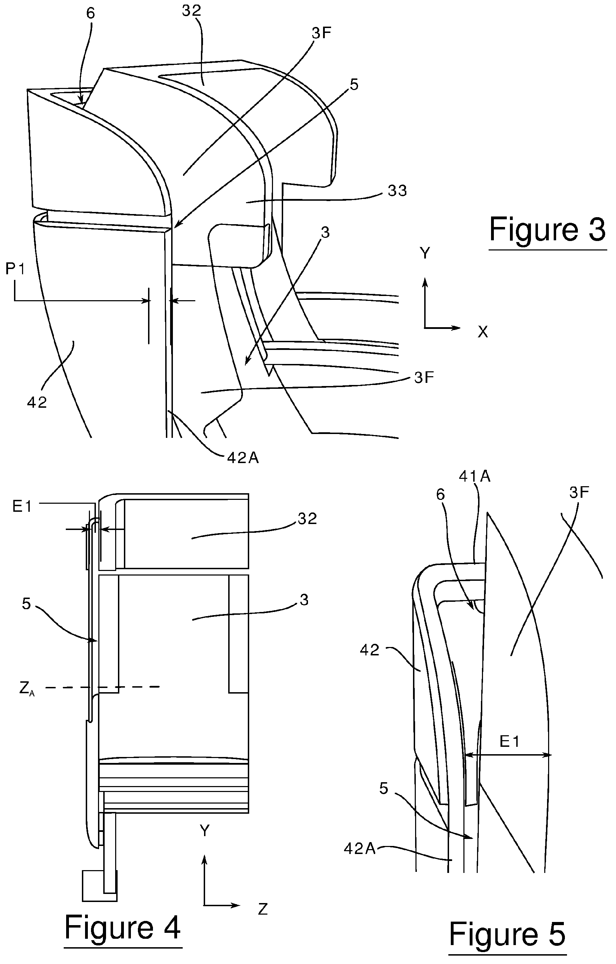

En référence maintenant aux figures 3 à 5, la partie latérale de protection 42 enveloppe partiellement le flanc 3F du dossier 3 de manière à ménager, entre ledit flanc 3F et ladite partie latérale de protection 42, une goulotte de préhension latérale 5 adaptée pour permettre l'insertion des doigts d'un passager. La goulotte de préhension latérale 5 s'étend verticalement selon l'axe Y entre la partie latérale de protection 42 et le flanc 3F du dossier 3, la largeur E1 de la goulotte de préhension latérale 5, c'est-à-dire sa dimension latérale, est supérieure à 20 mm de manière à permettre une préhension aisée de la coque de protection 4 par un passager. Une largeur E1 supérieure à 40 mm augmente de manière excessive la dimension latérale du siège ce qui présente un inconvénient. De préférence, la largeur E1 de la goulotte de préhension latérale 5 est égale à 25 mm.

De manière préférée, la goulotte de préhension latérale 5 s'étend verticalement depuis l'articulation Z_{A} de l'accoudoir 31 du siège 1 afin de permettre la préhension d'un passager de petite taille, par exemple, un enfant. Dans cet exemple, la goulotte de préhension latérale 5 s'étend verticalement jusqu'à l'extrémité supérieure de la coque de protection 4 comme représenté à la figure 5. La goulotte de préhension latérale 5 s'étend depuis une hauteur de plancher de 70 cm jusqu'à une hauteur de plancher de 120 cm.

La profondeur P1 de la goulotte de préhension latérale 5, c'est-à-dire sa dimension horizontale, est supérieure ou égale à 10 mm de manière à permettre une préhension aisée de la coque de protection 4 par un passager, les doigts du passager pouvant ainsi saisir le bord de la coque de protection 4.

En référence à la figure 3, la partie latérale de protection 42 s'étend latéralement, parallèlement au plan (X,Y), et comporte un bord d'extrémité avant 42A s'étendant verticalement selon l'axe Y. Dans cet exemple, le bord 42A de la partie latérale de protection 42 possède une épaisseur de l'ordre de 25 mm de manière à faciliter sa préhension par un passager.

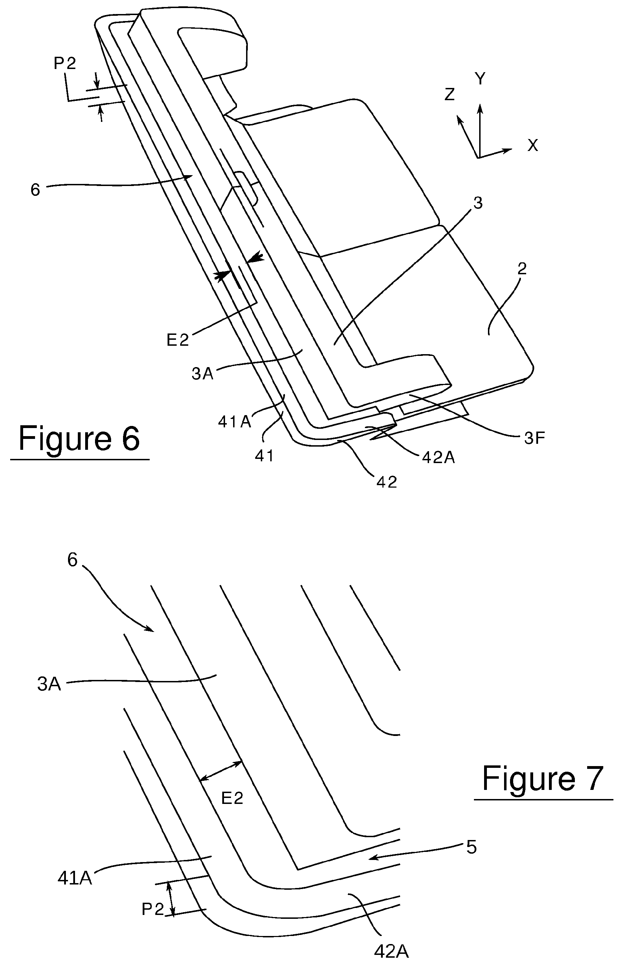

Comme représenté sur la figure 6, la partie arrière de protection 41 enveloppe partiellement la surface arrière 3A du dossier 3 de manière à ménager, entre la surface arrière du dossier et ladite partie arrière de protection 41, une goulotte de préhension arrière 6 adaptée pour permettre l'insertion des doigts d'un passager.

La goulotte de préhension arrière 6 s'étend latéralement selon l'axe Z entre la partie arrière de protection 41 et la surface arrière 3A du dossier 3, la largeur E2 de la goulotte de préhension arrière 6, c'est-à-dire sa dimension horizontale, est supérieure à 40 mm de manière à permettre une préhension aisée de la coque de protection 4 par un passager située à l'arrière du siège. Une épaisseur E2 supérieure à 60 mm augmente de manière excessive la dimension latérale du siège ce qui présente un inconvénient. De préférence, la largeur E2 de la goulotte de préhension arrière 6 est égale à 50 mm.

De manière préférée, comme représenté sur la figure 6, la goulotte de préhension arrière 6 s'étend latéralement sur toute la dimension latérale du siège 1 de manière à ce qu'un passager assis sur un siège de la rangée arrière puisse s'agripper à la goulotte de préhension arrière 6 située devant lui pour se relever.

La profondeur P2 de la goulotte de préhension arrière 6, c'est-à-dire sa dimension verticale, est supérieure ou égale à 10 mm de manière à permettre une préhension aisée de la coque de protection 4 par un passager, les doigts du passager pouvant ainsi saisir le bord de la coque de protection 4.

En référence à la figure 6, la partie arrière de protection 41 s'étend verticalement, parallèlement au plan (Y, Z), et comporte un bord d'extrémité supérieur 41A s'étendant latéralement selon l'axe Z. Dans cet exemple, le bord 41A de la partie arrière de protection 41 possède une épaisseur de l'ordre de 25 mm de manière à faciliter sa préhension par un passager.

Comme représenté sur les figures 5 à 7, la goulotte de préhension arrière 6 et la goulotte de préhension latérale 5 sont continues de manière à former une zone de préhension continue pour un passager, celui-ci n'ayant pas à chercher une zone spécifique où positionner sa main pour s'accrocher au siège 1. Dans cet exemple, le bord 41A de la partie arrière de protection 41 et le bord 42A de la partie latérale de protection 42 sont continus et possèdent, de manière préférée, la même épaisseur, de l'ordre de 25 mm.

Lors de son montage dans un véhicule ferroviaire, une pluralité de couples de sièges est fixée au plancher du véhicule ferroviaire, les couples de sièges étant répartis par rangées consécutives placées les unes derrière les autres. A titre d'exemple, le siège gauche 1a est placé à proximité du couloir de circulation de la voiture tandis que le siège droit 1b est placé à proximité d'une fenêtre de la voiture.

Lorsqu'un passager circule dans le couloir de circulation de la voiture, celui-ci peut s'agripper à chaque siège gauche 1a afin d'assurer son équilibre. Les goulottes de préhension 5, 6 possèdent des dimensions qui permettent l'insertion des doigts du passager qui peut ainsi s'agripper de manière sécurisée à la coque de protection 4 du siège 1. La préhension de la coque de protection 4 ne présente pas d'inconvénient pour le passager qui est assis sur le siège car le dossier 3 est indépendant de la coque de protection 4. Ainsi, une secousse de la coque de protection 4 n'est pas transmise au dossier 3 du passager ce qui est avantageux. En outre, la goulotte de préhension latérale 5 s'étend verticalement depuis une hauteur de l'ordre de 70 cm à une hauteur de l'ordre de 120 cm, la goulotte de préhension latérale 5 étant aisément accessible quelque soit la taille du passager. La coque de protection 4 possède avantageusement un encombrement faible.

De manière avantageuse, lorsqu'un passager, assis sur un siège, souhaite se relever, celui-ci peut s'aider du siège situé devant lui en insérant ses doigts dans la goulotte de préhension arrière 6 dudit siège. Comme la goulotte de préhension arrière 6 s'étend sur toute la longueur latérale du siège, le passager peut agripper la goulotte de préhension arrière 6 avec ses deux mains pour se relever. Une fois encore, toute secousse de la coque de protection 4 n'est pas ou peu transmise au passager du siège comportant la coque de protection 4 ce qui est avantageux.

## Revendications

1. Siège passager pour véhicule de transport, notamment ferroviaire, comportant un dossier (3), une assise (2) et un châssis sur lequel sont montés le dossier (3) et l'assise (2), le châssis du siège comportant une coque de protection (4) dans laquelle est monté le dossier (3), **caractérisé en ce qu'**il comprend une goulotte de préhension (5,6) adaptée pour permettre l'insertion des doigts d'un passager, ménagée entre une partie de protection (41, 42) de ladite coque de protection et une surface (3A, 3F) du dossier (3) enveloppé au moins partiellement par ladite partie de protection.

2. Siège selon la revendication 1, dans lequel, la coque de protection (4) comporte au moins une partie latérale de protection (42) enveloppant partiellement un flanc (3F) du dossier (3) de manière à ménager, entre ledit flanc (3F) du dossier (3) et ladite partie latérale de protection (42), une goulotte de préhension latérale (5) adaptée pour permettre l'insertion des doigts d'un passager.

3. Siège selon la revendication 2, dans lequel, la goulotte de préhension latérale (5) s'étend verticalement entre le dossier (3) et la coque de protection (4).

4. Siège selon l'une des revendications 2 à 3, dans lequel, le siège comportant un accoudoir articulé (31), la goulotte de préhension latérale (5) s'étend entre l'articulation (Z_{A}) de l'accoudoir (31) et une partie supérieur du dossier (3).

5. Siège selon l'une des revendications 2 à 4, dans lequel, la goulotte de préhension latérale (5) possède une largeur (E1) supérieure à 20mm, de préférence, égale à 25 mm.

6. Siège selon l'une des revendications 2 à 5, dans lequel, la partie latérale de protection (42) s'étend parallèlement au flanc (3F) du dossier (3).

7. Siège selon l'une des revendications 1 à 6, dans lequel, la coque de protection (4) comporte au moins une partie arrière de protection (41) enveloppant partiellement une surface arrière (3A) du dossier (3) de manière à ménager, entre la surface arrière (3A) du dossier (3) et ladite partie arrière de protection (41), une goulotte de préhension arrière (6) adaptée pour permettre l'insertion des doigts d'un passager.

8. Siège selon la revendication 7, dans lequel la goulotte de préhension arrière (6) s'étend latéralement entre le dossier (3) et la coque de préhension (4).

9. Siège selon l'une des revendications 7 à 8, dans lequel la partie arrière de protection (41) s'étend parallèlement à la surface arrière (3A) du dossier (3).

10. Siège selon l'une des revendications 7 à 9, dans lequel la goulotte de préhension arrière (6) est continue avec la goulotte de préhension latérale (5).

## Patentansprüche

1. Fahrgastsitz für ein Transportfahrzeug, insbesondere ein Schienentransportfahrzeug, mit einer Rückenlehne (3), einem Sitz (2) und einem Gestell auf dem die Rückenlehne (3) und der Sitz (2) montiert sind, wobei das Gestell des Sitzes eine Schutzschale (4) umfasst, in der die Rückenlehne (3) angebracht ist, **dadurch gekennzeichnet, dass** er eine Griffmulde (5, 6) aufweist, welche eingerichtet ist, das Einführen der Finger eines Fahrgastes zu ermöglichen, wobei sie zwischen einem Schutzteil (41, 42) der Schutzschale und einer Oberfläche (3A, 3F) der Rückenlehne (3) ausgebildet ist, die zumindest teilweise von dem Schutzteil umschlossen ist.

2. Sitz nach Anspruch 1, wobei die Schutzschale (4) mindestens ein seitliches Schutzteil (42) umfasst, das teilweise eine Seite (3F) der Rückenlehne (3) umschließt, um zwischen der Seite (3F) der Rückenlehne (3) und dem seitlichen Schutzteil (42) eine seitliche Griffmulde (5) aufzunehmen, welche eingerichtet ist, das Einführen der Finger eines Fahrgastes zu ermöglichen.

3. Sitz nach Anspruch 2, wobei sich die seitliche Griffmulde (5) vertikal zwischen der Rückenlehne (3) und der Schutzschale (4) erstreckt.

4. Sitz nach einem der Ansprüche 2 bis 3, wobei der Sitz einen Gelenkarmlehne (31) umfasst, wobei sich die seitliche Griffmulde (5) zwischen dem Gelenk (Z_{A}) der Armlehne (31) und einem oberen Teil der Rückenlehne (3) erstreckt.

5. Sitz nach einem der Ansprüche 2 bis 4, wobei die seitliche Griffmulde (5) eine Breite (E1) größer als 20 mm, vorzugsweise gleich 25 mm, besitzt.

6. Sitz nach einem der Ansprüche 2 bis 5, wobei sich das seitliche Schutzteil (42) parallel zu der Seite (3F) der Rückenlehne (3) erstreckt.

7. Sitz nach einem der Ansprüche 1 bis 6, wobei die Schutzschale (4) mindestens ein hinteres Schutzteil (41) umfasst, das teilweise eine hintere Oberfläche (3A) der Rückenlehne (3) so umschließt, um zwischen der hinteren Oberfläche (3A) der Rückenlehne (3) und dem hinteren Schutzteil (41) eine hintere Griffmulde (6) aufzunehmen, welche eingerichtet ist, das Einführen der Finger eines Fahrgastes zu ermöglichen.

8. Sitz nach Anspruch 7, wobei die hintere Griffmulde (6) sich seitlich zwischen der Rückenlehne (3) und der Schale zum Greifen (4) erstreckt.

9. Sitz nach einem der Ansprüche 7 bis 8, wobei sich das hintere Schutzteil (41) an der hinteren Fläche (3A) parallel zu der Rückenlehne (3) erstreckt.

10. Sitz nach einem der Ansprüche 7 bis 9, wobei die hintere Griffmulde (6) mit der seitlichen Griffmulde zusammenhängend ist (5).

## Claims

1. Passenger seat for a transport vehicle, in particular a railway transport vehicle, comprising a backrest (3), a base (2) and a frame whereon are mounted the backrest (3) and the base (2), with the seat frame comprising a protective shield (4) wherein is mounted the backrest (3), **characterised in that** it comprises a gripping chute (5, 6) adapted to allow for the insertion of the fingers of a passenger, arranged between a protection portion (41, 42) of said protective shield and a surface (3A, 3F) of the backrest (3) enclosed at least partially by said protection portion.

2. Seat according to claim 1, wherein, the protective shield (4) comprises at least one lateral protection portion (42) partially enclosing a flank (3F) of the backrest (3) in such a way as to arrange, between said flank (3F) of the backrest (3) and said lateral protection portion (42), a lateral gripping chute (5) adapted to allow for the insertion of the fingers of a passenger.

3. Seat according to claim 2, wherein, the lateral gripping chute (5) extends vertically between the backrest (3) and the protective shield (4).

4. Seat according to one of claims 2 to 3, wherein, the seat comprising an articulated armrest (31), the lateral gripping chute (5) extends between the articulation (Z_{A}) of the armrest (31) and an upper portion of the backrest (3).

5. Seat according to one of claims 2 to 4, wherein, the lateral gripping chute (5) has a width (E1) greater than 20mm, preferably, equal to 25 mm.

6. Seat according to one of claims 2 to 5, wherein, the lateral protection portion (42) extends parallel to the flank (3F) of the backrest (3).

7. Seat according to one of claims 1 to 6, wherein, the protective shield (4) comprises at least one rear protection portion (41) partially enclosing a rear surface (3A) of the backrest (3) in such a way as to arrange, between the rear surface (3A) of the backrest (3) and said rear protection portion (41), a rear gripping chute (6) adapted to allow for the insertion of the fingers of a passenger.

8. Seat according to claim 7, wherein the rear gripping chute (6) extends laterally between the backrest (3) and the protective shell (4).

9. Seat according to one of claims 7 to 8, wherein the rear protection portion (41) extends parallel to the rear surface (3A) of the backrest (3).

10. Seat according to one of claims 7 to 9, wherein the rear gripping chute (6) is continuous with the lateral gripping chute (5).
